(19) Europäisches Patentamt
European Patent Office
Office européen des brevets

(11) **EP 3 470 547 A1**

(12) **EUROPEAN PATENT APPLICATION**
published in accordance with Art. 153(4) EPC

(43) Date of publication:
**17.04.2019 Bulletin 2019/16**

(51) Int Cl.:
*C23C 22/05* [(2006.01)]     *H01B 5/02* [(2006.01)]
*H01R 13/03* [(2006.01)]

(21) Application number: **17810394.1**

(22) Date of filing: **08.06.2017**

(86) International application number:
**PCT/JP2017/021317**

(87) International publication number:
**WO 2017/213221 (14.12.2017 Gazette 2017/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.06.2016   JP 2016114775**

(71) Applicant: **UACJ Corporation
Tokyo 100-0004 (JP)**

(72) Inventors:
• **CHIMURA Yusuke
  Tokyo 100-0004 (JP)**
• **SHIMADA Takatoshi
  Tokyo 100-0004 (JP)**
• **YASUDA Kazufumi
  Tokyo 140-8675 (JP)**
• **KAMISAKAMOTO Hideaki
  Tokyo 140-8675 (JP)**

(74) Representative: **v. Bezold & Partner Patentanwälte - PartG mbB
Akademiestraße 7
80799 München (DE)**

(54) **ALUMINUM ALLOY CONDUCTIVE MEMBER FOR TRANSPORT DEVICE**

(57)    An aluminum alloy conductive member for a transport instrument includes: a substrate formed of an aluminum alloy; and a metal oxide coating film that is formed on a surface of the substrate and that includes a metal oxide of an element other than Al. In the aluminum alloy conductive member, the total coating film amount of the metal oxide coating film is 0.1 to 40 mg/m2 in terms of metal equivalent mass, and a constituent of the metal oxide coating film includes an oxide of one or more selected from the element group X consisting of Ti, Zr, Hf, V, Nb, Ta, Mo, and W, and an oxide of one or more selected from the element group Y consisting of Zn, In, Mg, Sn, and Ca.

EP 3 470 547 A1

**Description**

Technical Field

The present disclosure relates to an aluminum alloy conductive member for a transport instrument.

Background Art

Conductive members for electric connection are members used in the case of electrically connecting electric wires, connection terminals, electrodes, and the like. The conductive members have been used in automobiles and various products such as OA instruments, home electric appliances, and products for electric utility industries. With enhancing the performance of such products, the number of internally contained electrical instruments and electronic control devices has tended to also increase. Therefore, the amount of usage of conductive members such as bus bars and connectors establishing the electric connections of such electrical instruments, electronic control devices, and the like has also tended to increase.

Conductive members made of Cu alloys have been in vogue for conductive members for electric connection, including bus bar materials, because the conductivity of the conductive members for electric connection has been regarded as important. However, transport instruments including automobiles require more lightweight members for the purpose of improving fuel efficiency by weight reduction. The conductive members made of Cu alloys are being shifted to conductive members made of Al alloys as alternate products for the conductive members made of Cu alloys because of the higher cost of a raw material due to a recent steep rise in base metal price and concerns about exhaustion of Cu resources. The term "alloy" herein is used as a term of which the meaning includes the pure metal of the metal of the alloy and an alloy containing, as a main component, the metal of the alloy.

There are problems that contact electrical resistance (hereinafter, contact resistance) caused by an oxide coating film on a surface is high and is prone to be increased in the case of using an aluminum (Al) alloy material as a conductive member. For example, a conductor for an automobile made of an Al alloy, formed by successively layering Ni plating and Sn plating on a surface of an Al alloy substrate in order to suppress the formation of a coating film of an Al oxide having high electrical resistance is known as a technique of solving the problems (see Patent Literature 1).

Citation List

Patent Literature

Patent Literature 1: Unexamined Japanese Patent Application Kokai Publication No. 2000-207940

Summary of Invention

Technical Problem

However, such a conductive member subjected to plating treatment and made of Al has a problem that the number of steps in the plating is increased, thereby resulting in a higher cost, due to the difficulty in plating of Al as well as the high cost of the plating treatment in itself. Patent Literature 1 has had a problem that Zn treatment is required as pretreatment for plating, and the deterioration of productivity and an increase in cost are caused by the increased number of steps.

The present disclosure was made in view of the problems of such conventional technologies. An objective of the present disclosure is to suppress the formation of an Al oxide coating film formed on a surface of the Al alloy substrate of an aluminum alloy conductive member for a transport instrument. More specifically, the formation of an Al oxide coating film is suppressed, and contact resistance is maintained in a low state even under an environment in which heating and cooling are repeated, or even under a high-temperature and high-humidity environment. In addition, another objective of the present disclosure is to more inexpensively provide an aluminum alloy conductive member for a transport instrument, including the above functions.

Hereinafter, a coating film that is formed on a surface of an Al alloy substrate portion including an Al alloy material and that includes a metal oxide including an element other than Al is simply referred to as "metal oxide coating film".

Solution to Problem

In order to achieve the objectives described above, an aluminum alloy conductive member for a transport instrument according to the present disclosure is an aluminum alloy conductive member for a transport instrument, including:

a substrate formed of an aluminum alloy; and
a metal oxide coating film that is formed on a surface of the substrate and that includes a metal oxide of an element other than Al,
wherein the total coating film amount of the metal oxide coating film is 0.1 to 40 mg/m$^2$ in terms of metal equivalent mass, and
a constituent of the metal oxide coating film includes an oxide of one or more selected from the element group X consisting of Ti, Zr, Hf, V, Nb, Ta, Mo, and W, and an oxide of one or more selected from the element group Y consisting of Zn, In, Mg, Sn, and Ca.

The coating rate of the metal oxide coating film with respect to the surface of the substrate may be 50 to 100% in a region coming in contact with a member to be connected.

The film thickness of the metal oxide coating film may be 1 to 200 nm.

Assuming that the total metal substance amount of elements belonging to the element group X is nx, and the total metal substance amount of elements belonging to the element group Y is $n_Y$, a value of $n_Y/(n_X+n_Y)$ may be 0.003 to 0.95, more desirably 0.1 to 0.9, and still more desirably 0.25 to 0.8.

Advantageous Effects of Invention

According to the present disclosure, a metal oxide coating film formed on a surface of the Al alloy substrate of an aluminum alloy conductive member for a transport instrument suppresses the formation of a coating film of an Al oxide on the surface of the Al alloy substrate. Therefore, contact resistance in connection to a member to be connected can be decreased. In addition, the formation of a coating film of an Al oxide can be suppressed even under an environment in which heating and cooling are repeated, or even under a high-temperature and high-humidity environment, and contact resistance can be maintained in a low state even under an actual usage environment. In addition, according to the present disclosure, an aluminum alloy conductive member for a transport instrument, including the above functions, can be more inexpensively provided.

Description of Embodiments

In the present disclosure, a surface of an Al alloy substrate is not coated with plating having favorable conductivity but thinly coated with a metal oxide including an element other than Al. The present inventors found that it is possible to suppress the formation of an oxide coating film on a surface of an Al alloy substrate in such a manner, decrease contact resistance, and achieve the above-described objectives, and the present disclosure was thus accomplished.

The best embodiment to which the present disclosure is applied will be described below.

First, each component of an Al alloy conductive member of the present embodiment will be described in detail.

[Al Alloy Conductive Member]

The Al alloy conductive member of the present disclosure is an Al alloy conductive member including an Al alloy substrate portion and a metal oxide coating film formed on the Al alloy substrate portion.

[Al Alloy Substrate Portion]

A metal included in the Al alloy substrate portion is not particularly restricted as long as being an Al alloy. An alloy type preferred as a component material of a conductive member can be used from the viewpoint of mechanical strength, workability, electrical conductivity, general-purpose properties, a production cost, and the like.

Examples of the alloy type include alloy types based on pure Al, Al-Mn, Al-Mg, and Al-Mg-Si. The element other than Al in the Al alloy is not particularly restricted as long as being an element that can be used in the Al alloy. For example, Cu, Mn, Si, Mg, Zn, Ni, Ti, Fe, and the like can be contained in the Al alloy. Specific examples of the Al alloy include: A1150 and A1050 as pure Al-based Al alloys; A3003 and A3004 as Al-Mn-based Al alloys; A5052 and A5053 as Al-Mg-based Al alloys; and A6101 as an Al-Mg-Si-based alloy.

[Metal Oxide Coating Film]

The metal oxide coating film is formed on a surface of the Al alloy substrate portion. The metal oxide coating film suppresses the generation of an oxide on the surface of the Al alloy substrate portion. As a result, an increase in contact resistance caused by the growth of an Al oxide on the surface of the Al alloy substrate portion can be suppressed. The incorporation of an oxide having low electrical resistance in the metal oxide coating film results in a decrease in the electrical resistance of the metal oxide coating film and therefore enables contact resistance to be further lowered and the low contact resistance to be maintained for a long period of time, and the details thereof will be described later.

Known various formation methods can be used as a method of forming the metal oxide coating film, and the method of forming the metal oxide coating film is not particularly restricted. A technique capable of controlling a coating rate, a total coating film amount, and a film thickness described later, and a technique capable of controlling a metal element type in the metal oxide coating film and the rate thereof are desired. Examples of techniques of forming the metal oxide coating film having such features include a liquid phase deposition method (LPD method) in which a metal oxide is deposited using a solution of a fluoro-metal complex, and a sol-gel method in which the hydrolysis reaction and dehydration condensation of a metal alkoxide are used. In a case in which the metal oxide coating film is formed using the LPD method, a treatment solution for the metal oxide coating film is desirably an acid solution. Desired examples of an acid constituent of the acid solution include fluorinated acid, hydrochloric acid, nitric acid, and sulfuric acid.

The metal oxide coating film desirably coats 50% or more, more desirably 80% or more, still more desirably 95% or more, and most desirably 100%, of the Al alloy substrate portion in a region coming in contact with a member to be connected. The reason why a coating rate is specified to 50% or more is because the larger surface of the Al alloy substrate portion that is not coated with the metal oxide coating film results in the greater oxidization of the surface of the Al alloy substrate portion, in the generation of a coating film of an Al oxide on the surface, and thus in an increase in contact resistance.

The coating rate is defined as a value calculated by the following operation, measurement, and calculation. First, a cross section of the Al alloy substrate portion and the metal oxide coating film on the Al alloy substrate portion in a region in which the metal oxide coating film comes in contact with the member to be connected is taken out by a focused ion beam (FIB). Subsequently, the cross section of the metal oxide coating film is measured by an energy dispersive X-ray analyzer (EDS) using a transmission electron microscope (TEM), to thereby obtain the element mapping of the cross section. In an optional 500 nm-square visual field, a portion having a coating film thickness of less than 1.0 nm from the Al alloy substrate portion is regarded as a non-coating portion, and a portion having a coating film thickness of 1.0 nm or more from the Al alloy substrate portion is regarded as a coating portion. A value obtained by dividing the length of the coating portion by the sum of the lengths of the coating portion and the non-coating portion is regarded as the coating rate. A coating film of 1 nm or less was regarded as the non-coating portion because it is difficult to observe a coating film of 1.0 nm or less with the TEM.

With regard to the macroscopic coating region of the metal oxide coating film, a region coming in contact with the member to be connected in the Al alloy substrate portion may be coated in the range of the coating rate, and whether part or the whole of the Al alloy substrate portion is coated is not limited. As the coating region, a preferred coating region can be used depending on elements such as a production cost, corrosion resistance, and workability.

The metal oxide coating film desirably has a total coating film amount of 0.10 to 40 mg/m$^2$ in terms of metal equivalent mass. A total coating film amount of less than 0.10 mg/m$^2$ makes it impossible to sufficiently coat the Al alloy substrate portion and to sufficiently obtain the effect of suppressing the formation of an Al oxide due to the coating of the metal oxide coating film. A coating film amount of more than 40 mg/m$^2$ results in an increase in electrical resistance in the metal oxide coating film, corresponding to an increase in metal oxide coating film, and thus causes an increase in contact resistance.

The total coating film amount of the metal oxide coating film is more desirably 1.0 to 30 mg/m$^2$ in terms of metal equivalent mass. This is because when the total coating film amount is in this range, not only initial contact resistance is favorable but also favorable contact resistance can be obtained over a long period of time even under an environment in which heating and cooling are repeated.

The total coating film amount is defined as a value calculated by the following operation, measurement, and calculation. In other words, a region in which the metal oxide coating film comes in contact with the member to be connected is measured by fluorescent X-ray analysis (XRF), to obtain a fluorescent X-ray spectrum (S). In parallel, a substrate that includes the same Al substrate alloy material and no metal oxide coating film is measured to obtain a background fluorescent X-ray spectrum (B). A spectrum derived from the metal oxide coating film is obtained by subtracting the spectrum B from the spectrum S, and the total coating film amount of a metal element other than Al in the spectrum is defined as the total coating film amount of the metal oxide coating film. In the calculation of the total coating film amount, the coating film amount can be calculated by using a total coating film amount measured by the same technique and a calibration curve obtained from a known standard sample.

The film thickness of the metal oxide coating film is desirably 1.0 to 200 nm. It is difficult to observe a film thickness of less than 1.0 nm with a TEM. A film thickness of more than 200 nm results in an increase in electrical resistance in the metal oxide coating film, corresponding to an increase in metal oxide coating film, or causes a decrease in the density of the metal oxide coating film, thereby preventing the effect of suppressing the formation of an Al oxide due to the coating of the metal oxide coating film from being sufficiently obtained.

A film thickness of 10 to 100 nm is still more desirable. This is because when the film thickness is in this range, not only initial contact resistance is favorable but also favorable contact resistance can be obtained over a long period of time even under an environment in which heating and cooling are repeated.

The film thickness of the metal oxide coating film is defined as a value calculated by the following operation, measurement, and calculation. First, a cross section of the Al alloy substrate portion and the metal oxide coating film on the Al alloy substrate portion in a region in which the metallic oxide coating film comes in contact with the member to be connected is taken out by a focused ion beam (FIB). Subsequently, measurement is performed by an energy dispersive X-ray analyzer (EDS) using a transmission electron microscope (TEM), to obtain the element mapping of the cross section. The average value of film thicknesses at ten points in the optional visual field of the obtained element mapping is defined as the film thickness of the metal oxide coating film.

The metal oxide coating film desirably includes an oxide including one or more elements selected from the following element group X.

Examples of the elements of the element group X include elements, of which oxides have oxygen barrier properties, such as Ti, Zr, and Hf belonging to Group 4, V, Nb, and Ta belonging to Group 5, and Cr, Mo, and W belonging to Group 6 of the periodic table. However, elements other than the elements are acceptable without particular restriction as long as oxides of the other elements have barrier properties against oxygen into the Al alloy substrate portion.

The metal oxide coating film including an oxide including an element selected from the element group X (hereinafter referred to as "X group oxide") has the oxygen barrier properties possessed by the X group oxide. The oxygen barrier properties have the effect of preventing the surface of the Al alloy substrate portion beneath the metal oxide coating film from being exposed to oxygen in an external environment. The effect results in the suppression of the formation of a coating film of an Al oxide on the surface of the Al alloy substrate portion beneath the metal oxide coating film, thereby enabling low contact resistance to be maintained.

In addition, a constituent of the metal oxide coating film desirably includes an oxide including one or more elements selected from the following element group Y (hereinafter referred to as "Y group oxide") as well as the X group oxide.

Examples of the elements of the element group Y include Zn, In, Mg, Sn, and Ca of which the electrical resistances of oxides are low. However, elements other than these elements are acceptable without particular restriction as long as being elements that form oxides having low electrical resistance.

The reason why the metal oxide coating film is allowed to include the Y group oxide as well as the X group oxide is as follows. The electrical resistance of the metal oxide coating film including the X group oxide having the oxygen barrier properties is higher than that of a metal because the metal oxide coating film includes the oxide. The reason is because the electrical resistance of the Y group oxide is lower than that of the X group oxide, and therefore, the electrical resistance of the metal oxide coating film can be decreased by allowing the Y group oxide to be included in the metal oxide coating film.

The total metal substance amount nx of an element belonging to the element group X and the total metal substance amount $n_Y$ of an element belonging to the element group Y in the metal oxide coating film desirably satisfy a relationship defined by the following Expression (1):

$$0.003 \leq n_Y/(n_X + n_Y) \leq 0.95 \quad (1)$$

wherein nx is defined as the total sum of the substance amount per unit area (unit: $mol/m^2$) of an element that exists in the metal oxide coating film and belongs to the element group X, and $n_Y$ is defined as the total sum of the substance amount per unit area (unit: $mol/m^2$) of an element that exists in the metal oxide coating film and belongs to the element group Y. The total metal substance amount nx can be calculated by dividing each value of the total coating film amount belonging to the element group X by the atomic weight of each metal element belonging to the element group X included in the metal oxide coating film and by calculating the total sum of the thus obtained quotients.

The reason why $n_Y/(n_X + n_Y)$ is limited to the range of Expression (1) is as follows. In a case in which $n_Y/(n_X + n_Y)$ is less than 0.003, the effect of decreasing electrical resistance due to the addition of an oxide including an element selected from the element group Y is prevented from being sufficiently obtained. In a case in which $n_Y/(n_X + n_Y)$ is more than 0.95, the oxygen barrier properties of the coating film, resulting from an oxide including an element selected from the element group X, are prevented from being sufficiently obtained, and it is impossible to obtain favorable contact resistance for a long period of time.

It is still more desirable that $n_Y/(n_X + n_Y)$ satisfies a relationship defined by the following Expression (2).

$$0.1 \le n_Y/(n_X + n_Y) \le 0.9 \qquad (2)$$

The reason why $n_Y/(n_X + n_Y)$ is limited to the range of Expression (2) is as follows. In a case in which $n_Y/(n_X + n_Y)$ is in the neighborhood of 0.003 in Expression (1), the effect of decreasing the electrical resistance of the coating film due to the Y group oxide can be obtained, but the effect is poor. In a case in which $n_Y/(n_X + n_Y)$ is in the neighborhood of 0.95 in Expression (1), the effect of decreasing the electrical resistance of the coating film due to the Y group oxide can be sufficiently obtained, and initial contact resistance is decreased, but the oxygen barrier properties of the metal oxide coating film, resulting from the X group oxide, are deteriorated. Therefore, under an environment in which heating and cooling are repeated, contact resistance is increased, and the ability to maintain favorable contact resistance for a long period of time is poor.

In a case in which $n_Y/(n_X + n_Y)$ is in the range of Expression (2), it is possible to achieve both of the oxygen barrier properties of the metal oxide coating film, resulting from the X group oxide, and the effect of decreasing the electrical resistance of the coating film due to the Y group oxide, and to maintain favorable contact resistance for a long period of time, even under an environment in which heating and cooling are alternately repeated.

In addition, $n_Y/(n_X + n_Y)$ still more desirably satisfies a relationship defined by the following expression (3).

$$0.25 \le n_Y/(n_X + n_Y) \le 0.8 \qquad (3)$$

The reason why $n_Y/(n_X + n_Y)$ is limited to the range of Expression (3) is as follows. In a case in which $n_Y/(n_X + n_Y)$ is in the neighborhood of 0.1 in Expression (2), the effect of decreasing the electrical resistance of the coating film due to the Y group oxide can be obtained, but the effect is not saturated. In a case in which $n_Y/(n_X + n_Y)$ is in the neighborhood of 0.90 in Expression (2), the maintenance of favorable contact resistance for a long period of time under an environment in which heating and cooling are repeated can be achieved, but contact resistance is increased under an environment where high temperature and high humidity continue, which is a severe environment.

In a case in which $n_Y/(n_X + n_Y)$ is in the range of Expression (3), the effect of decreasing the electrical resistance of the coating film due to the Y group oxide can be sufficiently obtained while sufficiently maintaining the oxygen barrier properties of the coating film, resulting from the X group oxide even under a high-temperature and high-humidity environment. Accordingly, it is possible to maintain favorable contact resistance for a long period of time in this case.

[Contact Resistance]

Contact resistance herein refers to electrical resistance generated in an interface between a conductive member and a member to be connected which come in contact with each other when the conductive member and the member to be connected are electrically connected to each other. Examples of causes that determine the magnitude of the contact resistance include the composition of a surface of each member and a real contact area. In the cause as the composition of a surface of each member, the presence of a metal oxide coating film or soil such as an oil or a fat on a surface of a member results in an increase in electrical resistance in the portion of the presence and therefore causes contact resistance to be increased. The cause as the real contact area results from recesses and projections inevitability present on the surface of the member. In other words, an actual contact area, that is, the real contact area is smaller than an apparent contact area, and therefore, current is concentrated on the smaller area portion, whereby electrical resistance is increased, thereby increasing contact resistance.

In the present disclosure, coating with the metal oxide coating film results in the suppression of the growth of an Al oxide on the surface of the substrate, in a decrease in contact resistance resulting from a coating film of the Al oxide, and in a decrease in the electrical resistance of the coated metal oxide coating film. As a result, contact resistance is decreased in the present disclosure.

Specifically, the value of the initial contact resistance is a desirably 90 $\mu\Omega$ or less, still more desirably 50 $\mu\Omega$ or less, still more desirably 25 $\mu\Omega$ or less, still more desirably 15 $\mu\Omega$ or less, and most desirably 7 $\mu\Omega$ or less.

The value of the contact resistance after a rapid temperature change test on the supposition of an actual usage environment is desirably 100 $\mu\Omega$ or less, still more desirably 60 $\mu\Omega$ or less, still more desirably 30 $\mu\Omega$ or less, still more desirably 15 $\mu\Omega$ or less, and most desirably 10 $\mu\Omega$ or less.

The value of the contact resistance after a high-temperature and high-humidity test on the supposition of a storage environment after production is desirably 120 $\mu\Omega$ or less, still more desirably 90 $\mu\Omega$ or less, still more desirably 50 $\mu\Omega$ or less, still more desirably 25 $\mu\Omega$ or less, and most desirably 15 $\mu\Omega$ or less.

[Form Examples of Product Produced from Al Alloy Conductive Member of Present Disclosure]

Form examples of a conductive member product produced from the Al alloy conductive member of the present disclosure will be described below. The conductive member product produced from the Al alloy conductive member of the present disclosure is not limited to the form examples, and can be used in any product commonly used as a conductive member. Examples of the form examples of the conductive member product produced from the Al alloy conductive member of the present disclosure include: bus bars connecting various batteries and inverters, motors, power generators, and the like; and the connection terminals of the bus bars. In particular, the Al alloy conductive member of the present disclosure is preferably used in bus bars for transport instruments particularly including automobiles.

[Connection]

A connection refers to a general technique of electrically connecting a conductive member and a member to be connected to each other. Specific examples thereof include: mechanical connections such as bolting, riveting, swaging, and spring retaining; and chemical connections of materials included in various members, such as welding, deposition, fusion, and adhesion with an adhesive.

[Al Alloy Conductive Member]

The Al alloy conductive member of the present disclosure is not particularly limited as long as being a member that can be used for electric connection. The Al alloy conductive member of the present disclosure is preferably used in a transport instrument from the viewpoint of weight reduction. In this case, the Al alloy conductive member is used for electrical connection between electrical instruments such as a battery, an inverter, and a motor, through which large-capacity current can pass. Large-capacity current may also pass through the Al alloy conductive member of the present disclosure.

[Member to Be Connected]

The member to be connected is not particularly limited. Examples thereof include: electrical instruments such as various batteries, inverters, motors, and power generators; the connecting terminals of the electrical instruments; and other conductive members.

[Connecting Member]

As a connecting member, which is not particularly limited, a connecting member used for various techniques of electrically connecting the Al alloy conductive member and the member to be connected to each other is used as appropriate. Specific examples thereof include members used for mechanical connections, such as a set of a bolt and a nut, a screw, a rivet, and a flat spring. Additional examples thereof include members used for chemical connections, such as solder, wax, and an adhesive. Part of the Al alloy conductive member or the member to be connected may play a role as swaging, welding, or the like.

Examples

In the present examples, Examples according to the Al alloy conductive member of the present disclosure and Comparative Example will be described.
Table 1 sets forth the results of later-described evaluations of the performance of Al alloy conductive members of which the constitutions such as the amounts and compositions of metal oxide coating films formed on surfaces of Al alloy substrate portions were varied under various conditions. However, the present disclosure is not limited to Examples set forth in Table 1.
The results will be described in detail below.

[Table 1]

| Example | Presence or absence of substituted coating film | Coating rate of coating film (%) | Total coating film amount (μm) | Film thickness (μm) | X group element in metal oxide coating film | Y group element in metal oxide coating film | Other metal element | $n_Y/(n_X+n_Y)$ | Initial contact resistance value (μΩ) | Contact resistance value after rapid temperature change test (μΩ) | Contact resistance value after high-temperature and high-humidity test (μΩ) |
|---|---|---|---|---|---|---|---|---|---|---|---|
| S1 | Present | 100 | 15 | 50 | Zr | Zn | - | 0.70 | 5 | 7 | 13 |
| S2 | Present | 100 | 15 | 50 | Zr | Zn | - | 0.80 | 4 | 14 | 19 |
| S3 | Present | 100 | 15 | 50 | Zr | Zn | - | 0.25 | 9 | 17 | 15 |
| S4 | Present | 100 | 15 | 50 | Zr | Zn | - | 0.90 | 3 | 20 | 52 |
| S5 | Present | 100 | 15 | 50 | Zr | Zn | - | 0.10 | 12 | 18 | 20 |
| S6 | Present | 100 | 15 | 50 | Zr | Zn | - | 0.95 | 3 | 54 | 84 |
| S7 | Present | 100 | 15 | 50 | Zr | Zn | - | 0.003 | 13 | 18 | 21 |
| S8 | Present | 100 | 15 | 50 | Zr | In | - | 0.70 | 5 | 8 | 15 |
| S9 | Present | 100 | 15 | 50 | Zr | Mg | - | 0.70 | 6 | 9 | 15 |
| S10 | Present | 100 | 15 | 50 | Zr | Sn | - | 0.70 | 6 | 9 | 16 |
| S11 | Present | 100 | 15 | 50 | Zr | Ca | - | 0.70 | 8 | 10 | 15 |
| S12 | Present | 100 | 15 | 50 | Zr | Zn, Sn | - | 0.70 | 5 | 8 | 14 |
| S13 | Present | 100 | 15 | 50 | Zr | - | Ni | 0 | 16 | 22 | 23 |
| S14 | Present | 100 | 15 | 50 | Zr | - | - | 0 | 15 | 21 | 23 |
| S15 | Present | 100 | 15 | 50 | Ti | - | - | 0 | 18 | 23 | 24 |
| S16 | Present | 100 | 15 | 50 | Hf | - | - | 0 | 21 | 24 | 26 |
| S17 | Present | 100 | 15 | 50 | V | - | - | 0 | 19 | 26 | 26 |
| S18 | Present | 100 | 15 | 50 | Nb | - | - | 0 | 21 | 25 | 28 |
| S19 | Present | 100 | 15 | 50 | Ta | - | - | 0 | 20 | 27 | 31 |
| S20 | Present | 100 | 15 | 50 | Mo | - | - | 0 | 21 | 29 | 31 |
| S21 | Present | 100 | 15 | 50 | Zr, Ti | - | - | 0 | 17 | 22 | 24 |
| S22 | Present | 100 | 15 | 50 | W | - | - | 0 | 23 | 28 | 32 |

| Example | Presence or absence of substituted coating film | Coating rate of coating film (%) | Total coating film amount ($\mu$m) | Film thickness ($\mu$m) | X group element in metal oxide coating film | Y group element in metal oxide coating film | Other metal element | $n_Y/(n_X+n_Y)$ | Initial contact resistance value ($\mu\Omega$) | Contact resistance value after rapid temperature change test ($\mu\Omega$) | Contact resistance value after high-temperature and high-humidity test ($\mu\Omega$) |
|---|---|---|---|---|---|---|---|---|---|---|---|
| S23 | Present | 100 | 15 | 50 | - | Zn | - | 1.00 | 5 | 88 | 97 |
| S24 | Present | 100 | 15 | 50 | - | Mg | - | 1.00 | 7 | 81 | 102 |
| S25 | Present | 100 | 30 | 100 | Zr | - | - | 0 | 38 | 49 | 44 |
| S26 | Present | 95 | 1.0 | 10 | Zr | - | - | 0 | 16 | 27 | 38 |
| S27 | Present | 100 | 40 | 200 | Zr | - | - | 0 | 49 | 61 | 56 |
| S28 | Present | 95 | 0.10 | 1.0 | Zr | - | - | 0 | 29 | 37 | 44 |
| S29 | Present | 80 | 0.10 | 0.10 | Zr | - | - | 0 | 59 | 72 | 96 |
| S30 | Present | 100 | 50 | 400 | Zr | - | - | 0 | 81 | 91 | 88 |
| S31 | Present | 50 | 0.010 | 0.10 | Zr | - | - | 0 | 84 | 99 | 101 |
| S32 | Present | 40 | 0.010 | 0.10 | Zr | - | - | 0 | 89 | 101 | 121 |
| Example | Presence or absence of substituted coating film | Coating rate of coating film (%) | Total coating film amount ($\mu$m) | Film thickness ($\mu$m) | X group element in metal oxide coating film | Y group element in metal oxide coating film | Other metal element | $n_Y/(n_X+n_Y)$ | Initial contact resistance value ($\mu\Omega$) | Contact resistance value after rapid temperature change test ($\mu\Omega$) | Contact resistance value after high-temperature and high-humidity test ($\mu\Omega$) |
| T1 | Absent | 100 | 15 | 50 | - | - | - | - | 91 | 112 | 126 |

Thirty-two samples (Sample S1 to Sample S32) set forth in Table 1 as the present disclosure and one sample (Sample T1) as Comparative Example was produced and subjected to a performance evaluation test described later.

In Table 1, Examples in which "Present" is set forth in "Presence or absence of substituted coating film" (Sample S1 to Sample S32) are examples in which natural oxide coating films formed on surfaces of Al alloy substrates were substituted with metal oxide coating films of "X group element in metal oxide coating film (hereinafter referred to as "X group element")", "Y group element in metal oxide coating film (hereinafter referred to as "Y group element")", and "other metal element (hereinafter referred to as "other element")" which were metal elements other than Al. The example in which "Absent" is set forth in "Presence or absence of substituted coating film" (Sample T1) is an example in which a natural oxide coating film was still formed. Accordingly, items simply referred to as "coating film" and "film" in Table 1 refer to a substituted coating film and a natural oxide coating film, respectively. In each of examples including no X group element, examples including no Y group element, and examples including no other element, "-" is set forth in a corresponding cell.

First, the common constructions of the 33 samples (Sample S1 to Sample S32 and Sample T1) will be described in detail.

In the 33 samples, an A6101P-T6 alloy, worked to have a size of 20 mm in width, 60 mm in length, and 2.0 mm in thickness by working such as cutting, was used as each of Al alloy substrates. Each of the substrates has a hole having a diameter of 6.5 mm in the center of a plate surface in order to perform bolting when a contact resistance value is measured. Degreasing treatment of the above samples with acetone and hexane was performed after the cutting working.

Among Examples in the present disclosure, treatment of the 32 samples (Sample S1 to Sample S32) will now be described in detail.

First, each sample was etched at 50°C for 30 seconds using a 10% NaOH aqueous solution, followed by being washed with water for 30 seconds. Subsequently, each sample was washed with a 10% $HNO_3$ solution for 30 seconds, followed by being washed with water for 30 seconds. In such a manner, a coating film of an Al oxide on a surface of an Al alloy substrate portion was removed.

Then, the Al alloy substrate was immersed in an aqueous solution of a metal fluoride complex of an X group element, a Y group element, and another element corresponding to each sample to form a metal oxide coating film of interest on the surface of the Al alloy substrate portion. The predetermined coating rate, coating film amount, and film thickness in Table 1 can be controlled by changing, as appropriate, an immersion time for which each Al alloy substrate is immersed in the aqueous solution of the metal fluoride complex of the metal element, and the temperature of the aqueous solution in which the Al alloy substrate is immersed.

In the 32 samples produced by the formation treatment of the metal oxide coating films, the coating rates and film thicknesses of the metal oxide coating films were calculated by TEM-EDS, and the total coating film amounts of the metal oxide coating films were calculated by XRF.

A value of $n_Y/(n_X + n_Y)$ based on a total metal substance amount $n_X$ and a total metal substance amount $n_Y$ calculated from the X group element, the Y group element, and the other element is also set forth in Table 1. In the sample T1, $n_Y/(n_X + n_Y)$ is not applicable because the sample T1 includes none of the X group element, the Y group element, and the other element.

As is clear from Table 1, each of Sample S1 to Sample S32 includes the metal oxide coating film on the Al alloy substrate portion. The coating rates of Sample S1 to Sample S31 are 50% or more. The total coating film amounts of Sample S1 to Sample S30 are in a range of 0.10 to 40 mg/m$^2$ in terms of metal equivalent mass. The film thicknesses of the coating films of Sample S1 to Sample S28 are 1.0 to 200 nm. X group oxides are contained in the coating films of Sample S1 to Sample S26. Both X group oxides and Y group oxides are contained in the coating films of Sample S1 to Sample S12. Each of Sample S1 to sample S12 has a value of $n_Y/(n_X + n_Y)$ of 0.003 to 0.95.

Then, in the present Examples, the following various evaluation tests were conducted on the 33 samples (Sample S1 to Sample S32 and Sample T1) set forth in Table 1.

[Measurement of Contact Resistance]

A method of measuring a contact resistance value will be described below. According to a four-terminal method, a power supply, an ammeter, and a voltmeter were connected to both ends of each sample fastened with a bolt and a nut, to configure a measurement device. A potential difference at the time of passing no current was defined as $V_{OFF}$, and a potential difference at the time of passing a constant current of 0.5 A was defined as $V_{ON}$. Each of $V_{OFF}$ and $V_{ON}$ was measured, and a potential difference $\Delta V = V_{ON} - V_{OFF}$ at the time of ON-OFF was calculated. $\Delta V$ was measured five times per sample, and the average value of $\Delta V$ was defined as a contact resistance value ($\mu\Omega$).

[Initial Contact Resistance Value]

The contact resistance of each of the 33 samples described above in a direction vertical to the coating film surface of the sample was measured. Specifically, a set of two sheets of each sample was fastened at a torque load of 5.0 N·m using an M6 stainless steel bolt and an M6 stainless steel nut. Then, the contact resistance value of each sample was measured by the above-described method and defined as an initial contact resistance value. The results of the measurement of such initial contact resistance values are also set forth in Table 1.

[Contact Resistance Value after Rapid Temperature Change Test]

In the 33 samples described above, a product of a set of two sheets of each sample was fastened at a torque load of 5.0 N·m using an M6 stainless steel bolt and an M6 stainless steel nut. A rapid temperature change test Na defined in JIS C 60068-2-14: 2011 was conducted on the set of each of the samples, and contact resistance in a direction vertical to the coating film surface of the sample was then measured. Specifically, a low temperature $T_A$ was set at -40°C, a high temperature $T_B$ was set at 70°C, and the set was maintained at each temperature for an exposure time $t_1$ of 30 minutes. The maintenance for the exposure time $t_1$ at each of the low temperature and the high temperature was regarded as one cycle, and the temperature change test was conducted by repeating the maintenance in 500 cycles. Then, the contact resistance value of each sample was measured by the above-described technique and defined as a contact resistance value ($\mu\Omega$) after the rapid temperature change test. The results of the measurement of such contact resistance values after the rapid temperature change test are also set forth in Table 1.

[Contact Resistance Value after High-Temperature and High-Humidity Test]

A high-temperature and high-humidity (routine) test defined in JIS C 60068-2-78: 2015 was conducted on the 33 samples described above, and contact resistance in a direction vertical to the coating film surface of each sample was then measured. Specifically, each sample was exposed under conditions of a temperature of 50 $\pm$ 2°C and a relative humidity of 85 $\pm$ 3% for 56 days to conduct the high-temperature and high-humidity test. Then, a set of two sheets of each sample was fastened at a torque load of 5.0 N·m using an M6 stainless steel bolt and an M6 stainless steel nut. Then, the contact resistance value of each sample was measured by the above-described method and defined as a contact resistance value after the high-temperature and high-humidity test. The results of the measurement of such contact resistance values after the high-temperature and high-humidity test are also set forth in Table 1.

As is clear from Table 1, the contact resistance values in Examples S1 to S32 in which the natural oxide coating films on the surfaces of the Al alloy substrates were substituted with the metal oxide coating films were lower than those in Comparative Example T1.

In addition to the condition, the coating rates of the metal oxide coating films were set at 50% or more in Examples S1 to S31. In Examples S1 to S31, the effects of coating with the metal oxide coating films were sufficiently exhibited, and the contact resistance values were further decreased.

In addition to the two conditions, the coating film amounts of the metal oxide coating films were in a range of 0.10 to 40 mg/m$^2$ in terms of metal equivalent mass in Examples S1 to S30. In Examples S1 to S30, the contact resistances were further decreased because the coating film amounts were sufficient for coating the Al alloy substrate portions and exhibiting oxygen barrier properties, and the electrical resistances of the coating films themselves were in a range that was not excessive.

In addition to the three conditions, the film thicknesses of the metal oxide coating films were in a range of 1.0 to 200 nm in Examples S1 to S28. In Examples S1 to S28, the contact resistances were possibly further decreased because Examples S1 to S28 had the film thicknesses sufficient for coating the Al alloy substrate portions and exhibiting oxygen barrier properties, and the electrical resistances of the coating films themselves were in a range that was not excessive.

In addition to the four conditions, a metal oxide including a metal element (X group element) selected from the element group X (Ti, Zr, Hf, V, Nb, Ta, Mo, and W) was included as a constituent of the metal oxide coating film in each of Examples S1 to S22, and S25 to 28. Examples S1 to S22, and S25 to 28 had the sufficient oxygen barrier properties of the Al alloy substrate portions and sufficient corrosion resistance. In particular, the contact resistances after the rapid temperature change test and after the high-temperature and high-humidity test were lower than those in the other Examples and Comparison Example.

Such a metal oxide may include another element (Ni in the example of Example S13) corresponding to neither the X group element nor the Y group element.

In addition to the five conditions, a metal oxide including a metal element (Y group element) selected from the element group Y (Zn, In, Mg, Sn, and Ca) was included as a constituent of the metal oxide coating film in each of Examples S1 to S12. In Examples S1 to S12, the conductivity of the metal oxide coating films themselves was improved, thereby further decreasing the contact resistances.

In addition to the six conditions, the total metal substance amount nx of the element belonging to the element group X and the total metal substance amount $n_Y$ of the element belonging to the element group Y satisfy the above Expression (1) with regard to the constituents of the metal oxide coating film in each of Examples S1 to S12. The initial contact resistances in Examples S1 to S12 were further lower than those in Examples S15 and S23 which did not satisfy the above Expression (1).

In addition to the seven conditions, the total metal substance amount nx of the element belonging to the element group X and the total metal substance amount $n_Y$ of the element belonging to the element group Y satisfy the above Expression (2) with regard to the constituents of the metal oxide coating film in each of Examples S1 to S6, and S9 to S12. In Examples S1 to S6, and S9 to S12, both of improvement in the conductivity of the metal oxide coating films themselves and the corrosion resistance of the metal oxide coating films were achieved, whereby the initial contact resistances were decreased, and the contact resistances after the rapid temperature change test were decreased, in comparison with Examples S7 and S8 which did not satisfy the above Expression (2).

In addition to the eight conditions, the total metal substance amount nx of the element belonging to the element group X and the total metal substance amount $n_Y$ of the element belonging to the element group Y satisfy the above Expression (3) with regard to the constituents of the metal oxide coating film in each of Examples S1 to S4, and S9 to S12. In Examples S1 to S4, and S9 to S12, both of improvement in the conductivity of the metal oxide coating films themselves and the corrosion resistance of the metal oxide coating films were further achieved, whereby the initial contact resistances and the contact resistances after the rapid temperature change test were decreased, and the contact resistances after the high-temperature and high-humidity test were also decreased.

The present disclosure has been described above with reference to some embodiments and Examples. However, the present disclosure is not limited thereto. Examples thereof include an example in which a conductive member is deformed by bending working.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2016-114775, filed on June 8, 2016, the entire disclosure of which is incorporated by reference herein.

Industrial Applicability

The Al alloy conductive member of the present disclosure is useful in a bus bar for electric connection to a battery or an electronic instrument in transport instruments particularly including automobiles, especially hybrid vehicles and electric vehicles. The Al alloy conductive member is useful not only in the transport instruments but also as a conductive member for electric connection of other devices and machines.

**Claims**

1. An aluminum alloy conductive member for a transport instrument, the aluminum alloy conductive member comprising:

    a substrate formed of an aluminum alloy; and
    a metal oxide coating film that is formed on a surface of the substrate and that comprises a metal oxide of an element other than Al,
    wherein a total coating film amount of the metal oxide coating film is 0.1 to 40 mg/m$^2$ in terms of metal equivalent mass, and
    a constituent of the metal oxide coating film comprises an oxide of one or more selected from an element group X consisting of Ti, Zr, Hf, V, Nb, Ta, Mo, and W, and an oxide of one or more selected from an element group Y consisting of Zn, In, Mg, Sn, and Ca.

2. The aluminum alloy conductive member for a transport instrument according to claim 1, wherein
    a coating rate of the metal oxide coating film with respect to the surface of the substrate is 50 to 100% in a region coming in contact with a member to be connected.

3. The aluminum alloy conductive member for a transport instrument according to claim 1 or 2, wherein

a film thickness of the metal oxide coating film is 1 to 200 nm.

4. The aluminum alloy conductive member for a transport instrument according to any one of claims 1 to 3, wherein assuming that a total metal substance amount of elements belonging to the element group X is nx, and a total metal substance amount of elements belonging to the element group Y is $n_Y$, a value of $n_Y/(n_X + n_Y)$ is 0.003 to 0.95, more desirably 0.1 to 0.9, and still more desirably 0.25 to 0.8.

## INTERNATIONAL SEARCH REPORT

| | International application No. |
|---|---|
| | PCT/JP2017/021317 |

**A. CLASSIFICATION OF SUBJECT MATTER**
*C23C22/05*(2006.01)i, *H01B5/02*(2006.01)i, *H01R13/03*(2006.01)i

According to International Patent Classification (IPC) or to both national classification and IPC

**B. FIELDS SEARCHED**

Minimum documentation searched (classification system followed by classification symbols)
C23C22/05, H01B5/02, H01R13/03

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2012-031479 A (Kobe Steel, Ltd.),<br>16 February 2012 (16.02.2012),<br>claims; paragraphs [0001] to [0010], [0015] to [0070]<br>& CN 102312233 A | 1-4<br>2-4 |
| X<br>Y | JP 2014-062277 A (Kobe Steel, Ltd.),<br>10 April 2014 (10.04.2014),<br>claims; paragraphs [0001] to [0095]<br>& US 2015/0231859 A1<br>claims; paragraphs [0001] to [0150]<br>& WO 2014/045886 A1      & KR 10-2015-0038677 A<br>& CN 104619880 A | 1,3-4<br>2-4 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 July 2017 (06.07.17) | 18 July 2017 (18.07.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2017/021317

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2013-100599 A (Nippon Paint Co., Ltd.),<br>23 May 2013 (23.05.2013),<br>claims; paragraphs [0001] to [0008], [0010],<br>[0012] to [0051]<br>(Family: none) | 1,3-4<br>2-4 |
| X<br>Y | JP 2008-202149 A (Nihon Parkerizing Co., Ltd.),<br>04 September 2008 (04.09.2008),<br>claims; paragraphs [0001] to [0009], [0016] to<br>[0076]<br>(Family: none) | 1,3-4<br>2-4 |
| X<br>Y | JP 2011-068930 A (Kansai Paint Co., Ltd.),<br>07 April 2011 (07.04.2011),<br>claims; paragraphs [0001] to [0071]<br>& CN 102031508 A    & TW 201120245 A | 1,3-4<br>2-4 |
| Y | JP 06-025866 A (Sky Aluminium Co., Ltd.),<br>01 February 1994 (01.02.1994),<br>claims; paragraphs [0001] to [0004], [0009] to<br>[0021]<br>(Family: none) | 2-4 |
| A | JP 11-140662 A (Calsonic Corp.),<br>25 May 1999 (25.05.1999),<br>paragraph [0006]<br>(Family: none) | 1-4 |

Form PCT/ISA/210 (continuation of second sheet) (January 2015)

**EP 3 470 547 A1**

**Patent documents cited in the description**

- JP 2000207940 A

- JP 2016114775 A